# EUROPÄISCHE PATENTANMELDUNG

(11) **EP 1 550 838 A1**
(43) Veröffentlichungstag der Anmeldung: **06.07.2005**
(21) Anmeldenummer: 04031037.7
(22) Anmeldetag: 30.12.2004
(51) Int. Cl.: G01B 3/11

(54) **Messseil-Wegsensor mit Feder in der Seiltrommel**

(30) Priorität: 30.12.2003 DE 10361699
(71) Anmelder: ASM Automation Sensorik Messtechnik GmbH, 85452 Moosinning (DE)
(72) Erfinder: Steinich, Klaus Manfred, 85604 Zorneding/Pöring (DE)
(74) Vertreter: Alber, Norbert, Dipl.-Ing.

(57) **Zusammenfassung**

Die Anmeldung betrifft Messseil-Wegsensoren mit einer durch eine Flachspiralfeder, vorgespannten Seiltrommel und einem damit verbundenen Drehwinkelaufnehmer, z.B. Encoder (5).

Durch Anordnen der Flachspiralfeder (7) im Inneren der Seiltrommel (2) wird einerseits die Baulänge reduziert und andererseits wird es möglich, den Seileinlauf-Turm (6) in einer der Außenecken des Gehäuses (1) anzuordnen, was die Einsatzmöglichkeiten des Sensors verbessert.

## Beschreibung

### I. Anwendungsgebiet

Derartige Messeil-Wegsensoren müssen - abhängig vom jeweiligen Einsatzzweck - teilweise einander widersprechende Ziele erfüllen:

Einerseits eine hohe Messgenauigkeit, die wiederum vom spezifischen Einsatzzweck abhängt, andererseits eine möglichst große, dem Einsatzzweck angepasste, Seillänge, also Messlänge, und dabei auch ein möglichst gutes Verhalten beim Aufwickeln des Messseiles, was insbesondere mit der Veränderung der Zugkraft und damit der Rückzugskraft des Messseiles in Abhängigkeit der ausgezogenen Länge zusammenhängt.

Daneben sind allgemeine Forderungen wie möglichst geringe Herstellkosten, kleine Baugröße und gute Montagefreundlichkeit und damit auch Reparaturfreundlichkeit einzuhalten.

### II. Technischer Hintergrund

Aufgrund all dieser Aspekte war es bisher üblich, dass - bei Bauformen, bei denen die wesentlichen Teile, nämlich Flachspiral-Feder, Seiltrommel und Drehwinkel-Aufnehmer axial zueinander angeordnet waren - auch in axialer Richtung in dieser Reihenfolge angeordnet waren.

Zum einen deshalb, weil die Seiltrommel möglichst nah an der Welle des Drehwinkel-Aufnehmers positioniert sein sollte, da jedwedes Spiel, vor allem in Drehrichtung, zwischen der Seiltrommel und der Welle zu ungenaueren Messergebnissen führt, und ebenso ein nicht genau zentrischer Lauf der Seiltrommel relativ zur Welle des Drehwinkel-Aufnehmers. Zum anderen war die Seiltrommel am einen Ende der Anordnung angeordnet, da die Feder das mechanisch am schwierigsten zu handhabende Teil ist und vor allem nach dem Einbau erst "aufgezogen" werden muss für die endgültige Montage, was leichter zu bewerkstelligen ist, wenn sich die Feder an einem der beiden Enden des Sensors befindet.

### III. Darstellung der Erfindung

### a) Technische Aufgabe

Es ist daher die Aufgabe der vorliegenden Erfindung, einen Messeil-Wegsensor zu schaffen, der trotz nach wie vor einfachen, kostengünstigen Aufbaus möglichst kompakt, insbesondere möglichst kurz, baut, und auch in Innenecken eines aufnehmenden Bauteiles gut eingesetzt werden kann, und dennoch eine hohe Auszuglänge und Messgenauigkeit aufweist.

### b) Lösung der Aufgabe

Diese Aufgabe wird durch die Merkmale der Ansprüche 1 und 20 gelöst. Vorteilhafte Ausführungsformen ergeben sich aus den Unteransprüchen.

Durch die Anordnung der Feder, insbesondere der Flachspiral-Feder im axialen Längenbereich der Seiltrommel, nämlich vorzugsweise innerhalb der Seiltrommel, wird die Baulänge des Sensors reduziert. Gleichzeitig kann dadurch auch die Seiltrommel nahe der in Längsrichtung stirnseitigen Wand des Gehäuses des Wegsensors angeordnet werden.

Dadurch kann der Sensor auch in Innenecken eines aufnehmenden Bauteiles so positioniert werden, dass der Seilauslauf sich sehr nahe in dieser Innenecke befindet, und damit das ausgezogene Seil ebenfalls sehr nahe an dieser Innenecke und damit gut geschützt verläuft.

Vor allem durch Kombination der Position des Seileinlauf-Turmes nahe an einer der in Längsrichtung verlaufenden Außenkanten des Gehäuses kann der Turm auf diese Art und Weise in bzw. nahe an einer der Außenecken des Gehäuses positioniert werden, und speziell mit gleichbleibenden Abstand sowohl zur stirnseitigen Außenfläche als auch zur längs verlaufenden benachbarten Außenfläche, was die Planung der Positionierung und Montage an dem aufnehmenden Bauteil erleichtert.

Um dies zu erreichen, wird der Seileinlauf-Turm nicht wie üblich in der Mitte der axialen Erstreckung des Wickelbereiches der Seiltrommel angeordnet, sondern über dem stirnseitigen Ende der Seiltrommel. Damit das Seil ohne ein Überspringen der Bewicklung, also unter sicherer Einhaltung einer nur einlagigen Bewicklung, über den gesamten Wickelbereich gewickelt werden kann, wird der Turm verlängert, um trotz Auslenkung des Seiles von der Mittellage des Turmes aus nach nur einer Seite den gesamten axialen Wickelbereich der Seiltrommel überstreichen zu können, ohne den maximal zulässigen Auslenkungswinkel zu überschreiten.

Vorzugsweise wird - wenn dies für die geforderte Messlänge ausreicht - das mechanische Gehäuse, in dessen Innenraum sich Seiltrommel und Feder befinden, mit einer Querachse gewählt, die der größten Querachse, insbesondere dem Außendurchmesser, des Drehwinkel-Aufnehmers entspricht.

Bei größeren benötigten Seillängen kann entweder die axiale Erstreckung des Wickelbereiches vergrößert werden und analog die Länge des Turmes, also der Abstand der Seileinlauföffnung von dem Berührungspunkt des Seiles auf der Seiltrommel, oder der Durchmesser der Seiltrommel wird vergrößert mit der Folge, dass dann das mechanische Gehäuse einen größeren Durchmesser besitzt als der Drehwinkel-Aufnehmer.

Das Gehäuse des mechanischen Innenraumes kann - betrachtet in Längsrichtung, also der Rotationsachse des Drehwinkel-Aufnehmers - rechteckig, dann vorzugsweise quadratisch, oder auch rund sein, wobei die Querschnittsform des Drehwinkel-Aufnehmers, im Folgenden kurz generell als Encoder bezeichnet, in aller Regel rund ist.

Der Encoder ist in aller Regel ein Zukaufteil, bestehend aus einem Ansatzteil, aus dem stirnseitig ein Hals hervor steht, aus welchem wiederum die gegenüber dem Ansatzteil drehbare Welle vorsteht. Auf der von der Welle abgewandten Seite des Ansatzteiles ist die Auswerte-Elektronik untergebracht, die von einem auf das Ansatzteil aufgesteckten, kappenförmigen Gehäuse geschützt ist. Gegenüber diesem Gehäuse des elektrischen Innenraumes ist das auf der anderen Seite des Ansatzteiles angeordnete Gehäuse für den mechanischen Innenraum, vor allem eines rechteckig, insbesondere quadratisch in Blickrichtung der Rotationsachse des Encoders ausgebildet ist, meist ein Abschnitt eines geschlossenen Hohlprofils.

In einer Wand des Profiles ist in eine passende Bohrung das Ansatzteil bzw. der Hals des Ansatzteiles des Aufnehmers bzw. Encoders eingesteckt und fixiert. Zu diesem Zweck läuft außen um das Ansatzteil herum eine Befestigungsnut, in die Spannpratzen eingesteckt werden können, die in den überstehenden Ecken des rechteckigen oder quadratischen oder auch anders geformten Gehäuses des mechanischen Teils verschraubt sind.

Die offenen Seiten des Profilabschnitts werden durch Bleche, insbesondere Winkelbleche oder auch ein- oder mehrfach gekröpfte Winkelprofile verschlossen, wobei die abstehenden Schenkel der Fixierung gegenüber einem anderen Bauteil dienen können. Das Verschrauben erfolgt vorzugsweise in den in Längsrichtung des Profilabschnitts verlaufenden Schraubnuten, in die Schrauben selbstschneidend eingeschraubt werden können.

Das Gehäuse für den mechanischen Innenraum kann jedoch im Querschnitt auch rund gestaltet sein, dabei insbesondere als Tiefziehteil gestaltet sein, und insbesondere identisch mit dem Gehäuse des elektrischen Innenraumes gestaltet sein.

Zur Befestigung können auch ein stirnseitiger Abschlussdeckel eines in Längsrichtung verlaufenden Profilabschnittes, welches als Gehäuse des mechanischen Innenraumes dient, verwendet werden, und auch hier wieder insbesondere in Form eines gewinkelten oder gekröpften Formteiles.

Auch ein aus dem mechanischen Innenraum vorstehender Befestigungsschenkel kann an spezifischer Position vorhanden sein zur Fixierung gegenüber einem aufnehmenden Bauteil.

Die Seiltrommel, in der die Feder untergebracht ist, ist dabei vorzugsweise topfförmig ausgebildet und mit der offenen Seite zur benachbarten Stirnwand des Gehäuses hin gerichtet angeordnet, so dass bei der Montage von dieser Seite her die Feder in die Seiltrommel eingesetzt werden kann.

Die Seiltrommel weist dabei einen von dem inneren Freiraum für die Feder wegweisenden Befestigungsflansch auf, in dessen zentrale Bohrung die Welle des Drehwinkel-Aufnehmers beziehungsweise Encoders einsteckbar und mittels quer eingeschraubter Klemmschraube drehfest verbindbar ist.

Ein Problem bei derartigen Messseil-Wegsensoren besteht generell darin, dass beim Aufwickeln des Seiles das Seil nicht zu stark beschleunigt werden darf bzw. die durch die Feder in Aufwickelrichtung angetriebene Seiltrommel ein zu starkes Drehmoment entwickeln darf, um beim Abstoppen am Ende des Aufwickelvorganges das Seil nicht zu beschädigen oder gar reißen zu lassen. Allerdings ändert sich dieses Drehmoment im Laufe des Aufwickelvorganges abhängig davon, wie beim Aufwickeln die Zunahme der Masse durch das aufgewickelte Seil verläuft.

Aufgrund der Unterbringung der Feder in der Seiltrommel, die für das entstehende Drehmoment mit ursächlich ist, kann über das Wickelverhalten der Flachspiral-Feder während des Aufwickelns bzw. Abwickelns der Feder die Masse sowie deren Radialposition und darüber das Drehmoment der aus Seiltrommel, Seil und Feder bestehenden, rotierenden Einheit beeinflusst werden.

Dabei ist es von Bedeutung, dass in dem für die Feder zur Verfügung stehenden Freiraum, die Feder diesen Freiraum nie vollständig ausfüllt, sondern - meist an einer Stelle - des radialen Verlaufes - ein größerer radial Abstand zwischen den Wicklungen der Feder vorhanden ist. Da das äußere Ende der Feder am Außenumfang des Freiraumes und das innere Ende der Feder am Innenumfang des Freiraumes befestigt sind, erfolgt beim Aufwickeln bzw. Abwickeln der Feder - also einer relativen Verdrehung des inneren Endes zum äußeren Ende über viele Umdrehungen - eine Verlagerung dieses zwischen den Wicklungen vorhandenen Abstandes in radialer Richtung und damit eine Schwerpunktverlagerung der Masse der Feder in radialer Richtung.

In welche Richtung sich der Schwerpunkt der Feder während des Wickelvorganges verlagert, kann bestimmt werden durch Auswahl des nicht mitdrehenden bzw. mit der Seiltrommel mitdrehenden Endes der Feder am äußeren oder inneren Ende.

In einer bevorzugten Ausführungsform wird das innere Ende der Feder mit einem gehäusefesten Punkt verbunden, während das äußere Ende der Feder mit dem Innenumfang der topfförmigen Seiltrommel verbunden wird, also mit der Seiltrommel mitdreht. Dies bewirkt, dass im Zustand des weitestgehend ausgezogenen Seiles die Masse der Feder nahe des Innenradius des Freiraumes und damit der Feder konzentriert ist, während bei vollständig aufgewickeltem Messseil die Masse der Feder eher nahe am Außenumfang der Feder konzentriert ist. Wenn also bei vollständig ausgezogenem Seil das Seil losgelassen und die Seiltrommel durch die Feder in Aufwickelrichtung beschleunigt wird, ist das Drehmoment der rotierenden Einheit absolut betrachtet relativ gering, da noch wenig Seil auf der Seiltrommel aufgewickelt ist. Der Schwerpunkt der Masse der Feder befindet sich jedoch relativ weit außen. Mit zunehmendem Aufwickeln des Seiles erhöht sich die Masse der rotierenden Einheit, der Schwerpunkt der bewegten Masse wandert jedoch gleichzeitig radial weiter nach Innen, so dass das resultierende Drehmoment durch diesen Kompensationsvorgang im Wesentlichen über den Wickelvorgang hin gleich bleibt.

Das innere, gehäusefeste Ende der Feder wird an einem Spannbolzen fixiert, der - meist mit einem mittigen Schlitz ausgestattet - von außen in eine zentrale Bohrung der Stirnwand des Gehäuses eingesteckt wird und sich in den axialen Bereich der Feder hinein erstreckt und dort auf das inneren Ende der Feder gesteckt wird. Durch Verdrehen des Spannbolzens - der im Übrigen einen gegenüber dem Spannbolzen verbreiterten Spannflansch umfasst, der außen auf der stirnseitigen Fläche des Gehäuses aufliegt - wird die Feder gespannt und in dem gewünschten aufgezogenen Zustand gegenüber dem Gehäuse verschraubt.

Der Montagevorgang läuft in diesem Fall so ab, dass
- das Seil an der Seiltrommel befestigt, insbesondere auf dieser aufgewickelt, wird,
- das freie Ende des Seiles durch den Seileinlauf-Turm von innen nach außen durchgefädelt wird,
- die Seiltrommel im Gehäuse für den mechanischen Teil positioniert wird,
- der Encoder mit seiner Welle von außen so in das Gehäuse für den mechanischen Innenraum eingeschoben wird, dass sich die Welle in den Befestigungsflansch der Seiltrommel hinein erstreckt,
- die Seiltrommel so gedreht wird, dass die Klemmschraube von der noch offenen Seite des Gehäuses aus eingesetzt und festgezogen werden kann,
- der Spannbolzen von der Stirnseite her durch das Gehäuse durchgesteckt wird, bis er formschlüssig, jedenfalls drehfest, mit dem inneren Ende der Feder verbunden ist, die von Anfang an in der Seiltrommel montiert worden und am äußeren Ende mit der Seiltrommel verbunden war,
- der Spannbolzen wird - wenn das Seil vollständig auf der Seiltrommel aufgewickelt ist - in Richtung zunehmende Vorspannung der Feder gedreht, bis eine gewünschte ausreichende Vorspannung der Feder in Aufwickelrichtung erzielt ist und
- in dieser vorgespannten Stellung der Spannbolzen gegenüber dem Gehäuse fixiert durch Verschrauben des Spannflansches gegenüber der Stirnfläche des Gehäuses.

Wenn in axialer Richtung die Länge weiter reduziert werden soll, wird vorzugsweise der Befestigungsflansch der Seiltrommel, der vom Innenraum für die Feder wegweist und lediglich zum Einstecken der Welle des Encoders dient, weggelassen.

Um eine ausreichende axiale Überlappung von Befestigungsflansch und Welle zu erzielen, kann sich die Welle teilweise in das Innere des Freiraumes für die Feder hinein erstrecken, ebenso der Befestigungsflansch, während im Normalfall die Welle sich nicht in den axialen Bereich der Feder hinein erstreckt.

Für einige Anwendungsfälle kann es sinnvoll sein, die radiale Verlagerung der Masse der Feder anders zu wählen, also die Feder mit ihrem inneren Ende mit der Seiltrommel, also mitdrehend, zu fixieren, während das äußere Ende der Feder gehäusefest positioniert ist. In diesem Fall wird anstelle eines Spannbolzens ein Spanntopf verwendet, dessen Umfangswand sich nahe des inneren Freiraumes der Seiltrommel befindet, und an dem das äußere Ende der Feder befestigt wird, und mit dessen Hilfe die Feder ebenfalls durch Verdrehen des Spanntopfes und anschließendes Fixieren gegenüber dem Gehäuse vorgespannt wird.

Das innere Ende der Feder ist dagegen in diesem Fall an der Nabe der Seiltrommel fixiert, die sich zu diesem Zweck in axialer Richtung in den Bereich der Feder hinein erstreckt, wobei sich dann vorzugsweise auch die Welle bis in diesen Bereich erstreckt. Beispielsweise kann sich auch nur die Welle, nicht dagegen die Nabe der Seiltrommel, in den axialen Bereich der Feder hinein erstrecken, und die Feder ist mit ihren inneren Ende direkt auf der Welle des Encoders, die beispielsweise wieder von der Stirnseite her geschlitzt ausgebildet sein kann, befestigt, beispielsweise durch Einstecken des geköpften inneren Endes der Feder in den Schlitz der Welle.

### c) Ausführungsbeispiele

Ausführungsformen gemäß der Erfindung sind im Folgenden beispielhaft näher beschrieben. Es zeigen:
- Fig. 1:: eine erste Bauform des Sensors in verschiedenen Ansichten,
- Fig. 2:: eine zweite Bauform mit anderer Befestigung gegenüber der Umgebung,
- Fig. 3:: eine dritte Bauform mit wiederum anderer Befestigung,
- Fig. 4:: eine vierte Bauform mit durchgängig rundem Querschnitt,
- Fig. 5:: eine fünfte Bauform mit vergrößerter Seiltrommel,
- Fig. 6:: eine Bauform mit einseitig abstehender Befestigung,
- Fig. 7:: eine Bauform, bei der das innere Ende der Feder mit der Seiltrommel mitdreht und
- Fig. 8:: eine Prinzipdarstellung der Verlagerung einer Flachspiralfeder in einen Ringraum während des Wickelns.

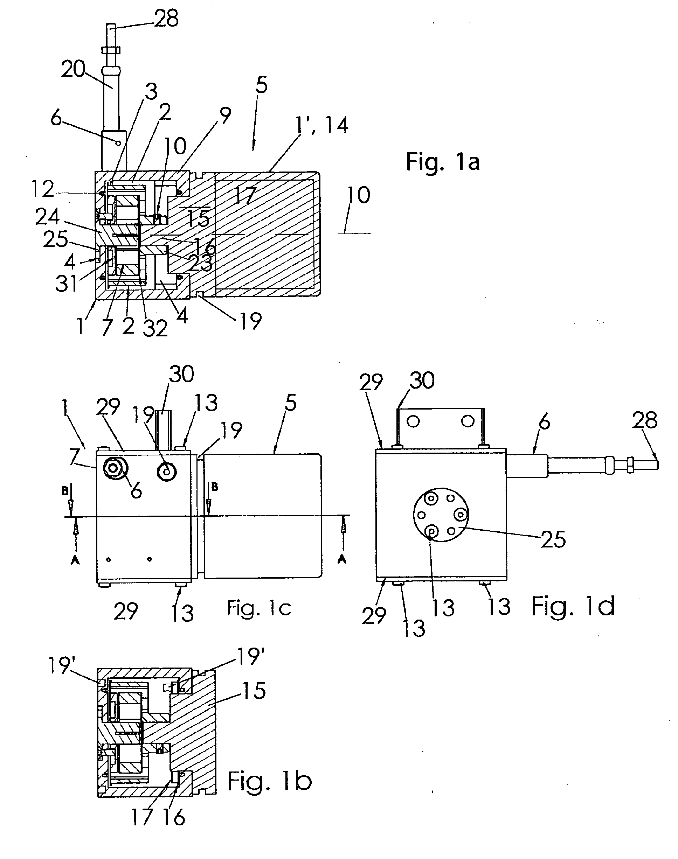

Anhand Fig. 1 soll zunächst der Grundaufbau des Sensors beschrieben werden, wie er am besten anhand der Längsschnittdarstellungen der Fig. 1 a und 1b, geschnitten entlang der Linien A-A und B-B der Fig. 1 c, erkennbar ist:

Im mechanischen Innenraum 4, der durch das Innere des entsprechenden Gehäuses 1 definiert wird, ist eine Seiltrommel 2 drehend gelagert, auf der das Messseil 3 aufgewickelt ist, welches sich durch den Seileinlauf-Turm 6 nach außen erstreckt.

Die Seiltrommel 2 ist topfförmig mit der offenen Seite, in diesem Fall zur nächstliegenden Außenwand, also in den Fig. 1 a und 1 b nach links, ausgebildet, und in ihrem hohlen Inneren mit einer dort aufgewickelten Flachspiral-Feder 7 wirkverbunden, die die Seiltrommel 2 in die Aufwickelrichtung vorspannt, weshalb im unbelasteten Zustand des Sensors das Messseil 3 vollständig auf der Seiltrommel 2 aufgewickelt ist (nicht dargestellt), so dass das freie Ende des Messseiles 3 mit seiner Endöse 28 und dem daran anschließenden Aufpralldämpfer 20 an der frei endenden Stirnseite des Seileinlauf-Turmes 6 anliegt. Axial anschließend an die Flachspiral-Feder 7 ist auf beiden Seiten jeweils eine Anlaufscheibe 31 aus z. B. reibungsarmen Kunststoff angeordnet, um ein Schleifer der Feder 8 vor allem am Innenumfang des Gehäuses 1 und dessen Profiles 9 zu verhindern. Der Turm 6 ist im Inneren zur Seiltrommel hin konisch sich erweiternd ausgebildet, um den Versatz des Messseiles 2 beim Aufwickeln in Längsrichtung 10, der Rotationsachse der Seiltrommel 2, zuzulassen, da eine immer exakt zuverlässig nur einlagige Bewicklung der Seiltrommel gewünscht ist, da nur dann ein bestimmter Drehwinkel der Seiltrommel 2 immer dergleichen Weglänge des Seilendes entspricht, welches mit dem hinsichtlich seiner Verlagerung zu überwachenden Gegenstandes verbunden wird.

Mit der Seiltrommel 2 ist ein Drehwinkel-Aufnehmer 5, beispielsweise ein Encoder, drehfest verbunden, der die Drehbewegungen der Seiltrommel exakt aufnimmt und als Längenmesssignal - beispielsweise parallel als absolutes und auch relatives Längenmesssignal - ausgibt. Der Encoder 5 ist in der Regel ein Zukaufteil, aus dem die Welle 16 stirnseitig vorsteht. Der Aufnehmer 5 besteht dabei im Wesentlichen aus einem Aufnehmer-Ansatzteil 15, wie am besten in Fig. 1 b zu erkennen, welches auf seiner Vorderseite einen zentral vorstehenden Hals 17 aufweist, aus dem wiederum die Welle 16 vorsteht, die drehend im Ansatzteil 15 sowie dessen Hals 17 gelagert ist. Auf der Rückseite des Ansatzteiles 15 ist die nicht dargestellte Auswerte-Elektronik untergebracht, die durch ein auf die Rückseite des Ansatzteiles 15 aufgesetzte und fixierte kappenförmiges Gehäuse 1' geschützt wird.

Der Aufnehmer 5 wird so an das mechanische Gehäuse 1 angesetzt, dass sich seine Welle 16 in die zentrale Bohrung der Seiltrommel 2 hinein erstreckt, und zwar möglichst spielfrei, und dort in einer bestimmten relativen Drehlage zueinander fixiert werden, in diesem Fall durch eine quer eingeschraubte Klemmschraube, oder auch durch Verkleben, Verpressen oder andere Methoden.

Im vorliegenden Fall steht zu diesem Zweck von der Seiltrommel 2 in die vom hohlen Innenraum wegweisende Richtung ein Befestigungsflansch 23 ab, in den die Welle 16 einschiebbar ist.

Die Wand des ansonsten kastenförmig umlaufend geschlossenen Hohlprofils 9, welches das Gehäuse 1 bildet, ist auf der Seite des Drehwinkelaufnehmers 5 mit einer Bohrung versehen, in welche der Hals 17 des Ansatzteiles 15 genau hineinpasst.

Damit ist die Seiltrommel 2 direkt auf der Welle 16 fixiert, deren Lagerung im Ansatzteil 15 somit auch für die Seiltrommel 2 mitgenutzt wird, so dass eine optimale Fluchtung zwischen Seiltrommel 2 und Welle 16 gewährleistet ist, was die Messgenauigkeit verbessert.

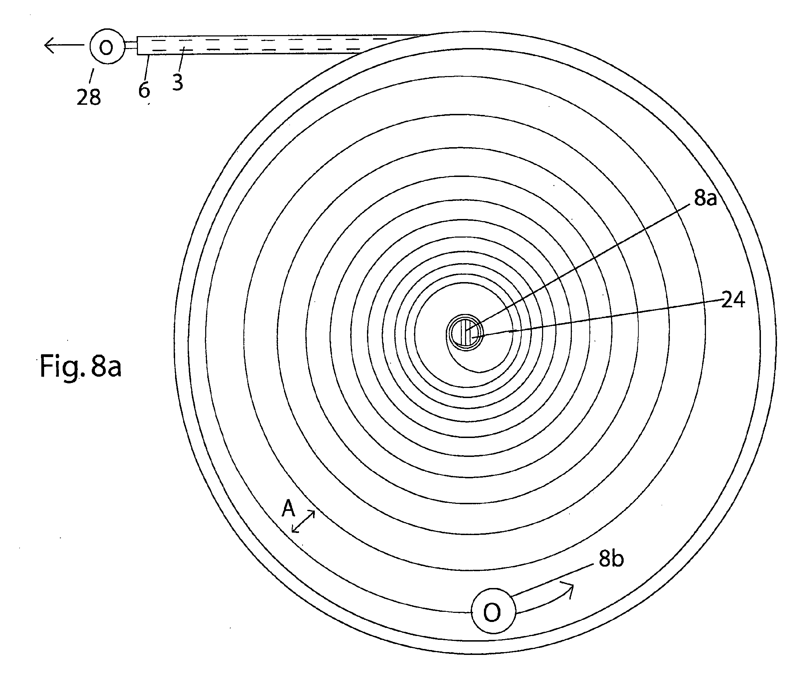

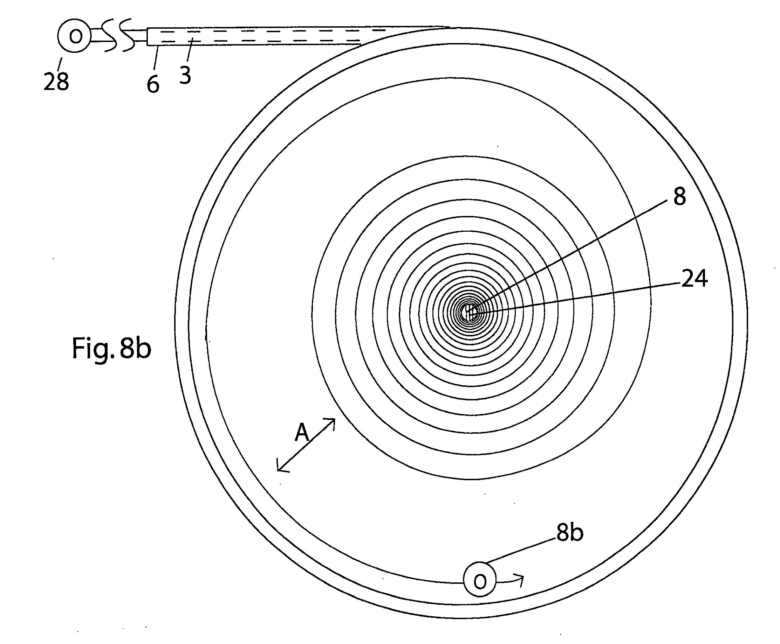

Die in einer einzigen Querebene zur Längsrichtung 10 lagenweise spiralig übereinander gewickelte Flachspiral-Feder 8 ist mit ihrem außenliegenden freien Ende mit der Seiltrommel 2 fest verbunden, und mit ihrem innenliegenden Ende mit einem Punkt, der fest mit dem Gehäuse 1 verbunden ist und nicht mit der Seiltrommel 2 mitdreht, wie in Prinzipdarstellung in den Figuren 8 dargestellt.

In diesem Fall ist der gehäusefeste Punkt ein Spannbolzen 24, der von der vom Drehwinkel-Aufnehmer 5 gegenüberliegenden Seite her durch eine entsprechende Bohrung der Wand des Gehäuses 1 hindurchgeschoben wird und in den inneren Freiraum in dem axialen Längenbereich der Seiltrommel 2 und damit der Feder 8 hineinragt. Der Spannbolzen 24 wird hier drehfest mit dem inneren Ende der Feder 8 verbunden, in der Regel durch axiales Einschieben des gekröpften, innenliegenden Endes der Flachspiralfeder 8 in einen zur Stirnseite hin offenen, in Längsrichtung verlaufenden Schlitz im Spannbolzen 24.

Der Spannbolzen 24 hat an seinem äußeren stirnseitigen Ende einen radial überstehenden Spannflansch 25, der - in der Regel in einer entsprechenden Ausnehmung - auf der Außenseite des Gehäuses 1 anliegt, eine runde Außenkontur hat (siehe Fig. 1d) und dort in einer gewünschten Drehlage relativ zum Gehäuse 1 mittels Fixierschrauben 13 fixiert werden kann. Zuvor jedoch wird durch Drehung des bereits mit der Feder 8 wirkverbundenen Spannflansches 25 relativ zum Gehäuse die Feder 8 etwas aufgezogen, um die notwendige Vorspannung auf die Seiltrommel und damit auf das Messseil 3 in Aufwickelrichtung aufzubringen. Zu diesem Zweck sind auf der Außenseite des Spannflansches 25 Vertiefungen zum Einsetzen eines entsprechenden Aufziehwerkzeuges vorhanden.

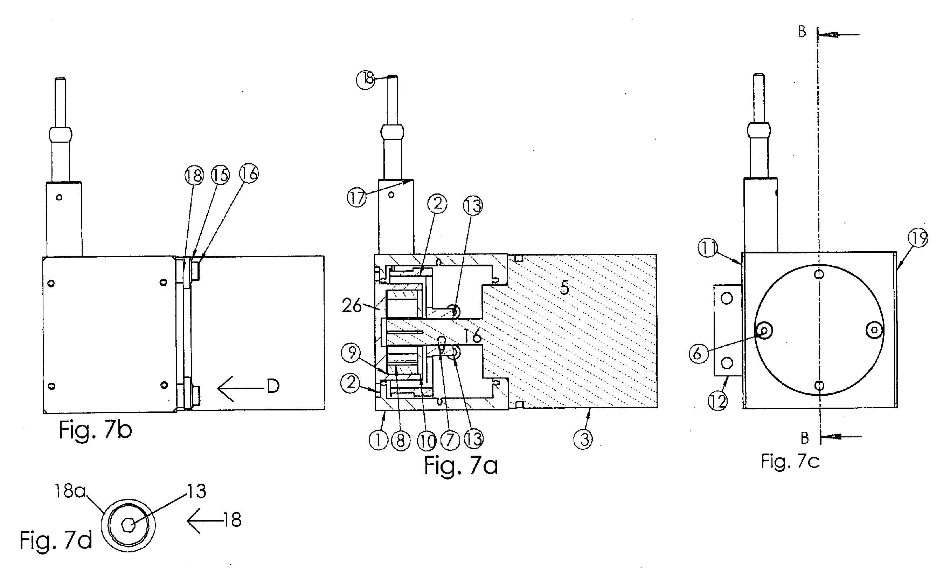

Das Gehäuse 1 für den mechanischen Innenraum ist in diesem Fall durch den in entsprechender Länge hergestellten Abschnitt 7 eines rechteckigen, geschlossen umlaufenden Hohlprofils 9 aus z. B. Aluminiumstrangguss hergestellt. Die seitlich offenen Stirnflächen des Abschnittes 7 werden am Ende der Montage mittels Deckeln 29 verschlossen, beispielsweise Blechteilen oder Profilteilen, die vorzugsweise in den Eckbereichen mittels Fixierschrauben 13 mit dem Hohlprofil 9 verschraubt werden, indem diese in an entsprechender Position im Innenumfang des Hohlprofils 9 vorhandene Einschraubnuten 12 eingeschraubt werden, in die sich die Fixierschrauben 13 selbstschneidend einschrauben lassen. Die Befestigung des Drehwinkel-Aufnehmers 5 gegenüber dem Gehäuse 1 erfolgt durch in den Fig.1 nicht dargestellte Spannpratzen 18, die in Fig. 7b und 7d dargestellt sind, und mit ihrem seitlichen Überstand 18a radial von außen in die Befestigungsnut 19 des Ansatzteiles 15 angreifen, während die die Spannpratze 18 durchdringende Fixierschraube 13 in den gegenüber dem runden Gehäuse des Aufnehmers 5 überstehenden Ecken des in Blickrichtung der Rotationsachse rechteckigen Gehäuses 1 verschraubt sind.

In einer Schnittdarstellung, betrachtet in Längsrichtung 10, zeigt den Wicklungszustand der Flachspiralfeder 8, wenn das Messseil 3 vollständig auf der Seiltrommel 2 aufgewickelt ist, also mit ihrer Endöse 28 am freien Ende des Turmes 6 anliegt.

Dann liegen die meisten Windungen der Feder 8 eng aneinander nahe des Außenumfanges des für die Feder in der Seiltrommel 2 zur Verfügung stehenden ringförmigen Freiraumes, während sich ein größerer Abstand A zwischen den am weitesten innen liegenden Windungen einstellt. Das innere Ende 8a der Feder ist mit seinem gekröpften Ende in dem Schlitz des Spannbolzens 24 ortsfest und nicht mit der Seiltrommel 2 drehend festgelegt. Im Gegensatz dazu ist das äußere Ende 8b der Feder an der Seiltrommel 2 fixiert.

Mit zunehmendem Abziehen der Endöse 28 und damit des Messseiles 3 von der Seiltrommel 2, wird die Feder 8 immer weiter aufgezogen, indem sich ihr äußeres Ende 8b mit der Seiltrommel 2 mitdreht. Die Feder 8 wird dadurch immer enger gewickelt mit der Folge, dass die Wicklungen sich dem kleineren, inneren Durchmesser annähern, so dass der zwischen den Windungen meist an einer Stelle erkennbare größere Abstand A weiter nach außen wandert. Im Endzustand, also bei vollständig abgewickeltem Messseil 2 und maximal gespannter, also eng gewickelter, Feder 8, wie in Fig. 8b dargestellt ist, befinden sich die Mehrheit der Wicklungen eng aneinander liegend um den als Kern dienenden Spannbolzen 24 gewickelt, während der größere radiale Abstand A zwischen den am weitest außen liegenden Windungen vorhanden ist.

Gemäß Fig. 1 erfolgt die Befestigung des Messseil-Wegsensors gegenüber der Umgebung, also z. B. einem Bauteil, an welchem der Sensor befestigt und eingesetzt werden soll, mit Hilfe eines Befestigungsprofils 30, welches über eines der offenen Stirnseiten des Profiles 9 vorsteht, und mit dem Profil 9 fest verbunden ist und seinerseits Durchgangsöffnungen zum Verschrauben mit dem aufnehmenden Bauteil aufweist.

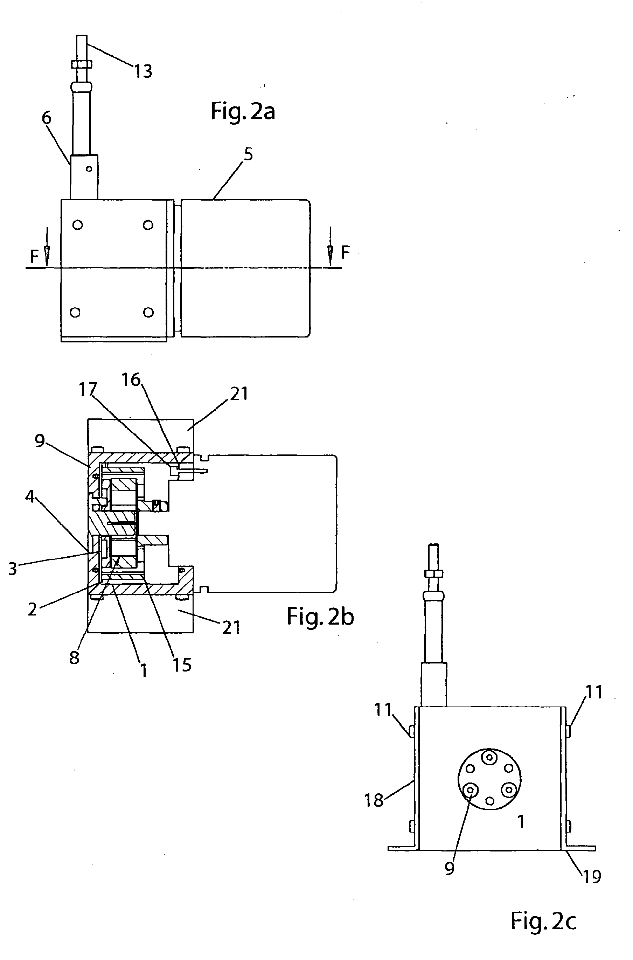

Die Bauform der Fig. 2 unterscheidet sich von derjenigen der Fig. 1 dadurch, dass anstelle der Deckel 29 der Fig. 1 Winkelprofile 21 verwendet sind, deren einer Schenkel als Deckel 29 jeweils eine der offenen Seiten des Profiles 9 abdeckt, und deren anderer Schenkel, der vom Gehäuse 1 abstrebt zur Befestigung, z. B. Verschraubung gegenüber einem tragenden Bauteil verwendet werden kann.

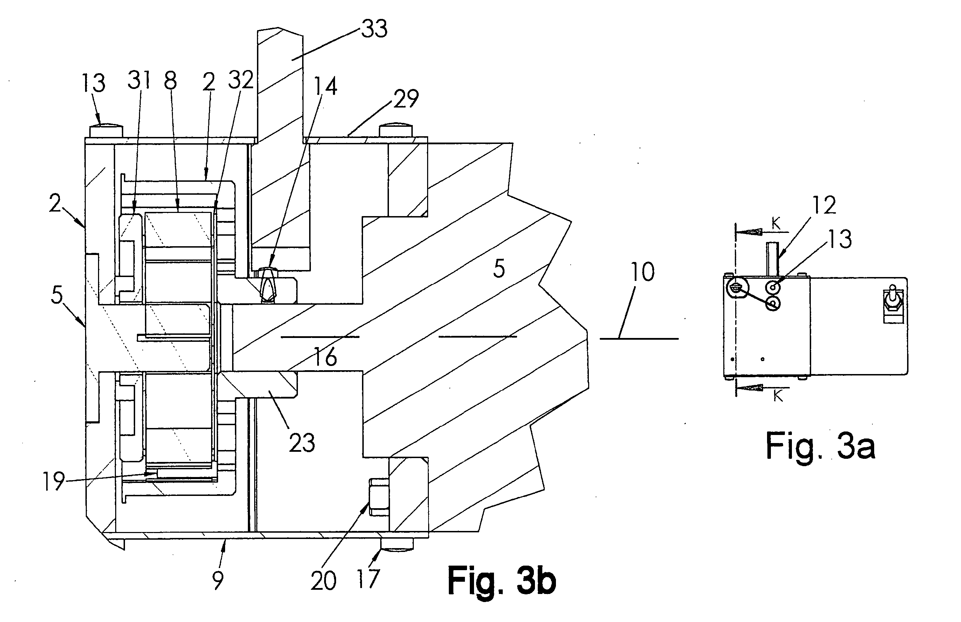

Die Bauform gemäß Fig. 3 unterscheidet sich dadurch, dass die Befestigung gegenüber der Umgebung mittels einer Fixierplatte 33 geschieht, die aus einer der offenen Stirnseiten des Profiles 9 vorsteht, wobei zu diesem Zweck der Deckel 29 einen entsprechenden Durchbruch aufweisen muss. Der in den mechanischen Innenraum hineinragende Teil der Fixierplatte 23 ist durch Verschrauben mit dem Profil 9 mittels von außen eingeschraubter Fixierschrauben 13 befestigt.

Fig. 3b lässt auch erkennen, dass die axiale Erstreckung des mechanischen Innenraumes, also gemessen in Richtung der Rotationsachse und damit Längsrichtung 10, davon abhängt, wie nahe die Seiltrommel 2 an das Ansatzteil 15 des Drehwinkel-Aufnehmers 5 herangebracht werden kann.

So ragt bei den Lösungen der Fig. 1 bis 3 die Welle 16 des Aufnehmers 5 zwar in den entsprechenden Befestigungsflansch 23 der Seiltrommel 2 hinein, jedoch nicht in den Innenraum und damit axialen Bereich der Feder 8. Bei einem lange auskragenden Wellenzapfen 16 bedingt bereits dies eine große axiale Erstreckung, ebenso wie das Anordnen einer voluminösen Fixierplatte 33 im axialen Bereich zwischen Seiltrommel 2 und Ansatzteil 15 des Messwertaufnehmers 5 und/oder der zum Zwecke des Verschraubens mit der Welle 16 abstehende Befestigungsflansch 23 der Seiltrommel 2.

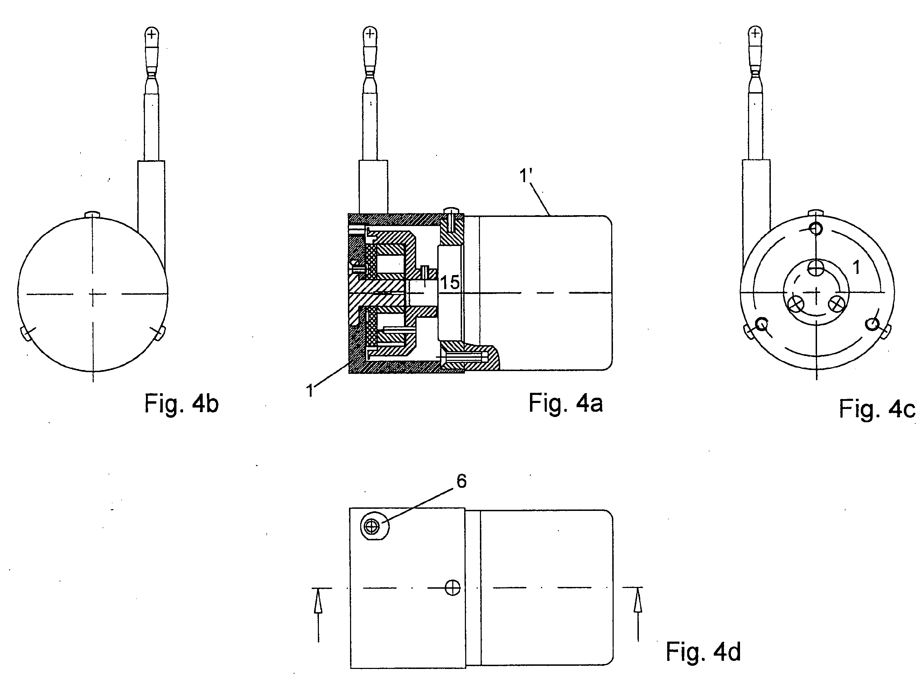

Die Fig. 4 zeigen eine Bauform des Sensors,
im Gegensatz zu den Lösungen der Fig. 1 bis 3 unterscheidet sich die Lösung gemäß Fig. 4 hiervon, dass nicht nur das Gehäuse 1' des Drehwinkel-Aufnehmers im Querschnitt rund ausgebildet ist, sondern auch das Gehäuse 1 für den mechanischen Innenraum. In diesem Fall handelt es sich um ein ebenfalls topfförmiges Gehäuse, welches auf das Ansatzteil 15 gesteckt und beispielsweise mittels eines Zwischenringes verschraubt wird.

Auch die Verwendung zweier identischer Gehäuse, insbesondere topfförmiger Gehäuse 1, 1' für den mechanischen und den elektrischen Innenraum ist denkbar.

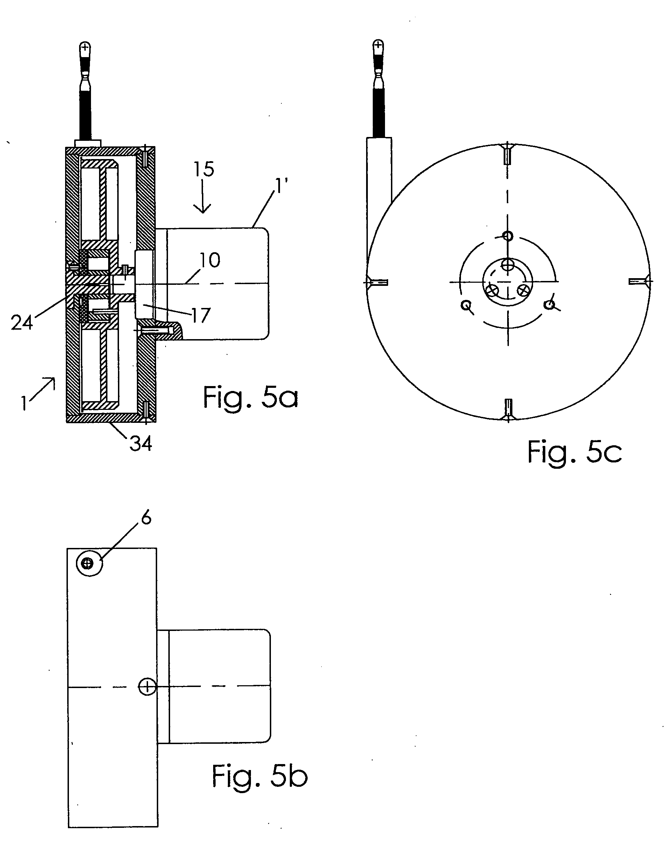

Während bei Fig. 4 der Durchmesser des Gehäuses 1 für den mechanischen Innenraum annähernd identisch ist mit dem des Gehäuses 1' für den elektrischen Innenraum, zeigt Fig. 5 eine Lösung, bei der das Gehäuse 1 für den mechanischen Innenraum zwar ebenfalls - betrachtet in Längsrichtung 10 - rund ausgebildet ist, jedoch einen wesentlich größeren Durchmesser besitzt als das Gehäuse 1' des Aufnehmers 15. Diese Lösung ist häufig nicht umgehbar, wenn besonders große Auszuglängen des Messseiles und damit Messlängen gefordert werden.

Zusätzlich ist in diesem Fall das Gehäuse 1 nicht topfförmig ausgebildet, sondern besteht aus einem Abschnitt eines runden Rohrprofils 34, auf welches stirnseitig entsprechend runde Enddeckel aufgesetzt bzw. teilweise eingesetzt sind, die wiederum die notwendigen Durchbrüche für Spannbolzen 24 und den Hals 17 des Aufnehmers 15 besitzen.

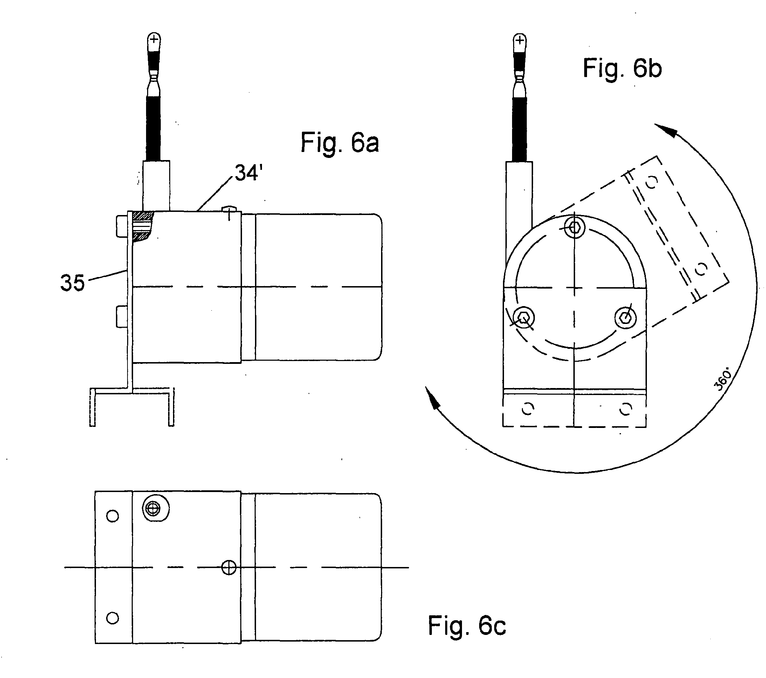

Die Lösung gemäß Fig. 6 unterscheidet sich von derjenigen der Fig. 5 zum einen wiederum dadurch, dass die jeweils im Querschnitt runden Gehäuse 1, 1' etwa den gleichen Durchmesser besitzen, wie bei Fig. 4, und zusätzlich der Deckel 35, der das stirnseitige freie Ende des Rohrprofils 34' abdeckt, radial einseitig über das Rohrprofil 34' vorsteht und im Überstand einfach oder gar mehrfach gekröpft ist, wobei die überstehenden, insbesondere gekröpften, Teile zur Fixierung gegenüber einem den Sensor tragenden Bauteil dienen.

Alle übrigen, anhand der Fig. 2 bis 6 nicht erwähnten, Details, insbesondere Anordnung und Ausbildung der Komponenten im Inneren des mechanischen Innenraumes sowie alle anderen Details, unterschieden sich nicht von der Lösung gemäß Fig. 1.

Fig. 7 zeigt eine Lösung, die hinsichtlich des grundsätzlichen Aufbaus demjenigen der Fig. 1 entspricht.

Der erste Unterschied besteht jedoch darin, dass die Welle 16 des Drehwinkel-Aufnehmers 5 länger vorsteht und bis in den axialen Bereich ins Innere der Seiltrommel 2 und damit auch den axialen Bereich der Feder 8 hineinragt und diesen sogar vollständig durchdringt.

Dies ist erwünscht, da in diesem Fall - und somit im Gegensatz zu Fig. 8 - das innere Ende der Feder 8 drehfest mit der Welle 16 und damit auch drehfest mit der Seiltrommel 2 verbunden ist durch Einstecken des gekröpften Federendes in den Schlitz der Welle 16.

Ortsfest fixiert und nicht mitdrehend mit der Seiltrommel 2 ist dagegen das äußere Ende der Feder 8 und zwar an der Innenseite der Umfangswände eines topfförmigen Spanntopfes 26, der durch eine entsprechend größere Bohrung in der Außenwand des Gehäuses 1 analog wie der Spannbolzen 24 von außen eingeschoben wird und in den inneren Freiraum der Seiltrommel 2 hineinragt, allerdings mit den Außenumfangswänden des Spanntopfes 26 nahe an den radial äußeren Enden des Freiraumes der Seiltrommel 2.

Durch das Einschieben des Spanntopfes 26 in axialer Richtung wird das radial äußere Ende der Feder 8 daran fixiert, so dass - analog zum Spannbolzen 24 - der Spanntopf 26 anschließend durch Verdrehen gegenüber dem Gehäuse zum Vorspannen der Feder 8 benutzt werden kann.

Die Massenverlagerung der Feder 8 während des Wickelvorganges ist dadurch entgegengesetzt zu den anhand der Fig. 8 beschriebenen Abläufen.

### BEZUGSZEICHENLISTE

- 1': Gehäuse (Aufnehmer)
- 1: Gehäuse (mechanisch)
- 2: Seiltrommel
- 3: Messseil
- 4: mechanischer Innenraum
- 5: Drehwinkel-Aufnehmer
- 6: Seileinlauf-Turm
- 7: Abschnitt
- 8: Feder
- 9: Hohlprofil
- 10: Längsrichtung
- 11: Kante
- 12: Einschraubnut
- 13: Fixierschrauben
- 14: kappenförmiges Gehäuse
- 15: Aufnehmer-Ansatzteil
- 16: Aufnehmer-Welle
- 17: Hals
- 18: Spannpratzen
- 19, 19': Befestigungsnut
- 20: Aufpralldämpfer
- 21: Winkelprofil
- 22: Freiraum
- 23: Befestigungsflansch
- 24: Spannbolzen
- 25: Spannflansch
- 26: Spanntopf
- 27: stirnseitiges Ende
- 28: Endöse
- 29: Deckel
- 30: Befestigungsprofil
- 31: Anlaufscheibe
- 32: Anlaufscheibe
- 33: Fixierplatte
- 34: Rohrprofil
- 35: Deckel

- A: Abstand

## Patentansprüche

1. Messseil-Wegsensor mit
- einem auf die Seiltrommel (2) aufgewickelten Messseil (3),
- wobei die Seiltrommel (2) in Aufwickelrichtung von einer Feder (8), insbesondere einer Flachspiral-Feder, vorgespannt ist,
- einem mit der Seiltrommel (2) drehfest verbundenen Drehwinkel-Aufnehmer, insbesondere einem Encoder (5),einschließlich einer Auswerte-Elektronik,
**dadurch gekennzeichnet, dass**
die Feder (8) in der Seiltrommel (2) angeordnet ist.

2. Messseil-Wegsensor nach Anspruch 1,
**dadurch gekennzeichnet, dass**
- die Feder (2) vollständig in axialer Richtung, insbesondere auch radial, innerhalb der Seiltrommel (2) angeordnet ist, und/oder insbesondere
- die Seiltrommel (2) direkt auf der Aufnehmerwelle (16) befestigt, insbesondere verklemmt oder verklebt, ist.

3. Messseil-Wegsensor nach einem der vorhergehenden Ansprüche,
**dadurch gekennzeichnet, dass**
- das Gehäuse (1) für den mechanischen Innenraum (4) auf den Hals (17) des Aufnehmer-Ansatzteiles (15) ausgesteckt und mit dem Ansatzteil (15) insbesondere formschlüssig verbunden, insbesondere mittels Spannpratzen (18), die in eine umlaufende Befestigungsnut (19) des Ansatzteiles (15) eingreifen, befestigt ist, und/oder insbesondere
- das Gehäuse (1) für den mechanischen Innenraum (4) ein Abschnitt (7) eines geschlossenen Hohlprofils (9) ist, dessen Erstreckungsrichtung insbesondere quer zur Längsrichtung (10) verläuft.

4. Messseil-Wegsensor nach einem der vorhergehenden Ansprüche,
**dadurch gekennzeichnet, dass**
- das Gehäuse (1) für den mechanischen Innenraum kappenförmig ausgebildet ist mit der offenen Seite zum Drehwinkel-Aufnehmer (5) hinweisend und insbesondere dieses kappenförmige Gehäuse identisch ist mit dem kappenförmigen Gehäuse (14) des Drehwinkel-Aufnehmers (5), und/oder insbesondere
- das Gehäuse (1) für den mechanischen Innenraum quaderförmig ausgebildet ist und insbesondere Befestigungsnuten (19)' auf seiner Außenfläche aufweist, parallel verlaufend zu den Kanten des Gehäuses (1 ), und insbesondere jeweils gleichweit beabstandet von den Kanten (11 ).

5. Messseil-Wegsensor nach einem der vorhergehenden Ansprüche,
**dadurch gekennzeichnet, dass**
- das Hohlprofil (9) am Innenumfang mehrere Einschraubnuten (12), insbesondere nahe den Innenkanten, aufweist zum Einschrauben von Fixierschrauben (13) in Längsrichtung der Einschraubnut (12) und/oder insbesondere
- der Abschnitt (7) des Hohlprofils (9) stirnseitig verschlossen ist durch aufgesetzte Deckel, insbesondere in Form von Winkelblechen oder Winkelprofilen (21).

6. Messseil-Wegsensor nach einem der vorhergehenden Ansprüche,
**dadurch gekennzeichnet, dass**
- das Gehäuse (1) für den mechanischen Innenraum betrachtet in Längsrichtung (10) einen quadratischen Querschnitt besitzt mit einer Kantenlänge entsprechend oder größer dem größten Querschnitt, insbesondere dem Durchmesser, des Gehäuses (1') für den elektrischen Innenraum, und insbesondere die Spannpratzen (18) zum Verbinden der Gehäuse (1) und (1') in den Bereichen des quadratischen Gehäuses (1) für den mechanischen Innenraum angeordnet sind, und/oder insbesondere
- das Gehäuse (1) für den mechanischen Innenraum einen runden Querschnitt, betrachtet in Längsrichtung (10), aufweist und insbesondere den gleichen Durchmesser besitzt wie das Gehäuse (1') für den elektrischen Innenraum.

7. Messseil-Wegsensor nach einem der vorhergehenden Ansprüche,
**dadurch gekennzeichnet, dass**
- die Aufnehmerwelle (16) nicht in den inneren Freiraum (22) der Seiltrommel (2) hineinragt, und/oder insbesondere
- die Seiltrommel (2) topfförmig ausgebildet ist mit einem vom Freiraum (22) wegweisenden Befestigungsflansch (23), der von einer Gewindebohrung quer durchdrungen wird zum Fixieren auf der Aufnehmerwelle (16).

8. Messseil-Wegsensor nach einem der vorhergehenden Ansprüche,
**dadurch gekennzeichnet, dass**
- das die Flachspiral-Feder (8) an ihrem äußeren Ende mit der Seiltrommel (2) verbunden ist und an ihrem inneren Ende mit dem Gehäuse (1) des mechanischen Innenraumes, insbesondere mit einem Spannbolzen (24), der relativ zum Gehäuse (1) verdrehbar und mit diesem drehfest verbindbar ist, und/oder insbesondere
- der Spannbolzen (24) von außen das Gehäuse (1) einschiebbar ist und mit einem Spannflansch (25), der von außen auf dem Gehäuse (1) aufliegt.

9. Messseil-Wegsensor nach einem der vorhergehenden Ansprüche,
**dadurch gekennzeichnet, dass**
- die Aufnehmerwelle (16) sich in axialer Richtung in den Freiraum (22) der Seiltrommel (2) hinein erstreckt und drehfest mit dem inneren Ende der Feder (8) verbunden ist, während das äußere Ende der Feder (8) an einem Spanntopf (26) fixiert ist, der gegenüber dem Gehäuse (1) drehbar und in einer gewünschten Drehlage fixierbar ist, und/oder insbesondere
- der Spanntopf (26) von außen in das Gehäuse (1) einsetzbar ist und einen Spannflansch (25') aufweist, der von außen auf dem Gehäuse (1) aufsitzt.

10. Messseil-Wegsensor nach einem der vorhergehenden Ansprüche,
**dadurch gekennzeichnet, dass**
- die Einschraub-Nuten (12) identisch gestaltet sind wie die Befestigungsnuten (19), (19') und insbesondere als Kombinuten ausgebildet sind, und/oder insbesondere
- die Spannpratzen (18) zum Verbinden der Gehäuse (1) und (1') in identischer Form zum Fixieren des Wegsensors an einem anderen Bauteil mittels der Befestigungsnuten (19') verwendet werden.

11. Messseil-Wegsensor mit
- einem auf die Seiltrommel (2) aufgewickelten Messseil (3),
- wobei die Seiltrommel (2) in Aufwickelrichtung von einer Feder (8), insbesondere einer Flachspiral-Feder, vorgespannt ist,
- einem mit der Seiltrommel (2) drehfest verbundenen Drehwinkel-Aufnehmer, insbesondere einem Encoder (5), einschließlich einer Auswerte-Elektronik,
**dadurch gekennzeichnet, dass**
der Seileinlauf-Turm (6) nahe dem stirnseitigen Ende des Gehäuses (1) des Wegsensors angeordnet ist.

12. Messseil-Wegsensor nach Anspruch 11,
**dadurch gekennzeichnet, dass**
- der Seileinlauf-Turm (6) in einer Ecke des Gehäuses (1) des mechanischen Innenraum des Wegsensors angeordnet ist, und insbesondere von dem stirnseitigen Ende und dem nächstliegenden in Längsrichtung verlaufenden Endfläche des Gehäuses (1) gleichweit beanstandet ist, und/oder insbesondere
- der Turm (6) außermittig zur axialen Erstreckung der Seiltrommel (2) angeordnet ist, insbesondere versetzt in Richtung des stirnseitigen Endes (27) des Gehäuses (1) des mechanischen Innenraumes.

13. Messseil-Wegsensor nach einem der vorhergehenden Ansprüche,
**dadurch gekennzeichnet, dass**
der Turm (6) eine so große Länge aufweist, dass die durch den Turm bedingte Auslenkungsmöglichkeit des Messseiles in nur eine Auslenkrichtung bereits so groß ist, dass damit die gesamte axialen Erstreckung des Wickelbereiches der Seiltrommel (2) abgedeckt werden kann, ohne dass die einlagige Bewicklung der Seiltrommel gefährdet wird.
